(19) Europäisches Patentamt

European Patent Office

Office européen des brevets

(11) **EP 0 708 928 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int Cl.7: **G01S 17/42**, G01S 17/02, G01S 7/487

(21) Anmeldenummer: **94928807.0**

(22) Anmeldetag: **24.09.1994**

(86) Internationale Anmeldenummer:
**PCT/EP94/03188**

(87) Internationale Veröffentlichungsnummer:
**WO 95/22771 (24.08.1995 Gazette 1995/36)**

(54) **VERFAHREN ZUM ERFASSEN VON OBJEKTEN IN EINEM ÜBERWACHUNGSBEREICH**

PROCESS FOR DETECTING OBJECTS IN A MONITORING REGION

PROCEDE DE DETECTION D'OBJETS DANS UNE ZONE DE SURVEILLANCE

(84) Benannte Vertragsstaaten:
**CH DE FR GB IT LI NL**

(30) Priorität: **19.02.1994 DE 4405376**

(43) Veröffentlichungstag der Anmeldung:
**01.05.1996 Patentblatt 1996/18**

(73) Patentinhaber: **Leuze electronic GmbH + Co.
73277 Owen/Teck (DE)**

(72) Erfinder:
• **RUCKH, Rainer
 D-73079 Süssen (DE)**
• **ARGAST, Martin
 D-72584 Hülben (DE)**

(56) Entgegenhaltungen:
**EP-A- 0 520 247        DE-U- 8 912 983**

• **PROCEEDINGS OF THE 1992 IEEE/RSJ INTERNATIONAL CONFERENCE ON INTELLIGENT ROBOTS AND SYSTEMS, Vol 3, 7.-10. Juli 1992, IEEE New York, NJ, US;**

**Beschreibung**

Die Erfindung betrifft ein Verfahren gemäß dem Oberbegriff des Anspruchs 1

Aus der DE 41 19 797 A1 ist eine Überwachungseinrichtung bekannt, bei der Objekte innerhalb eines zu überwachenden Bereichs berührungslos erfaßt werden. Hierzu ist der zu überwachende Bereich durch eine aus beliebigem Material bestehende Referenzfläche begrenzt. Zur Überwachung des Bereichs, des sogenannten Schutzfeldes, wird eine einen Sender, einen Empfänger und eine Auswerteeinheit aufweisende Vorrichtung eingesetzt. Zweckmäßigerweise ist die Vorrichtung als Lichttaster ausgebildet, dessen Sendelichtstrahl über eine Ablenkvorrichtung entlang des zu überwachenden Bereichs geführt wird. Mit dem Lichttaster wird die Distanz der Referenzfläche zur Vorrichtung gemessen. Der Distanzwert wird in der Auswerteeinheit mit einem Sollwert verglichen. Stimmt der Distanzwert innerhalb eines Toleranzbereichs mit dem Sollwert überein und übersteigt die am Empfänger anstehende Lichtleistung einen Mindestwert, erfolgt eine Signalabgabe "Schutzfeld frei".

Bei Eintritt eines Objektes in den zu überwachenden Bereich wird der Strahlengang zwischen der Vorrichtung und der Referenzfläche unterbrochen und in der Auswerteeinheit der Distanzwert des Objekts zur Vorrichtung registriert. Liegt der Distanzwert außerhalb des Toleranzbereichs oder unterschreitet die am Empfänger anstehende Lichtleistung den Mindestwert, so erfolgt die Signalabgabe "Schutzfeld nicht frei".

Der Vorteil dieses Verfahrens besteht darin, daß durch Auswertung der Distanzmeßwerte und der Signalpegel am Empfänger eine hohe Detektionssicherheit erzielt wird.

Jedoch stößt dieses Verfahren insbesondere dann an seine Grenzen, wenn Objekte sehr dicht vor der Referenzfläche angeordnet sind. In diesem Fall können aufgrund von Meßwertschwankungen die in der Vorrichtung registrierten Distanzwerte für das Objekt bzw. die Referenzfläche gleich sein oder ggf. für das Objekt sogar größer als für die Referenzfläche sein, so daß das Objekt nicht mehr erkannt werden kann.

Die Meßwertschwankungen können durch Bauteilfehler, durch Alterung der Bauteile oder dergleichen hervorgerufen werden. Dieser Effekt wird noch verstärkt, wenn das Objekt und die Referenzfläche nahezu dasselbe Reflexionsvermögen aufweisen, so daß die Empfangsamplituden nahezu identisch sind.

Der Erfindung liegt die Aufgabe zugrunde, ein Verfahren zur Erkennung von Objekten in einem zu überwachenden Bereich zu schaffen, das eine sichere Detektion selbst bei großen Schwankungen der Meßwerte für die Position des Objekts gewährleistet.

Zur Lösung dieser Aufgabe sind die kennzeichnenden Merkmale des Anspruchs 1 vorgesehen. Zweckmäßige Ausführungsformen und vorteilhafte Weiterbildungen der Erfindung sind in den Ansprüchen 2 - 8 beschrieben.

Der Grundgedanke der Erfindung besteht darin, daß zur Objekterfassung keine Bewertung von Einzelmessungen durchgeführt werden, sondern entsprechend den Konturen der zu vermessenden Objekte mehrere Positionsmeßwerte zur Detektion der Objekte herangezogen werden. Bei der Definition der Toleranzbänder werden bekannte Informationen über die Geometrie des Objekts verwertet.

Der zu überwachende Bereich wird vom Sendestrahl des Senders vorzugsweise periodisch abgetastet. Zur Auswertung der Positionsmeßwerte gemäß dem erfindungsgemäßen Verfahren werden zweckmäßigerweise jeweils Positionsmeßwerte innerhalb einer Periodendauer herangezogen. Eine Mitteilung der Positionsmeßwerte über mehrere Periodendauern ist nicht notwendig. Dies ist insbesondere dann von Vorteil, wenn Objekte erfaßt werden müssen, die sich innerhalb des zu überwachenden Bereichs bewegen.

In der Auswerteeinheit sind Konturen von definierten Objekten, die vorzugsweise als Referenzobjekte ausgebildet sind, abgespeichert. Dabei kann es sich insbesondere um relativ zur Vorrichtung stationär angeordnete Objekte handeln oder um Objekte, die sich entlang einer vorgegebenen Bahn im zu überwachenden Bereich bewegen. Der letztere Fall ist beispielsweise bei Vorrichtungen, die auf spurgeführten Fahrzeugen montiert sind, realisiert. Die Objekte sind dann beispielsweise von Wandelementen oder Wänden gebildet, an denen sich das Fahrzeug vorbeibewegt.

Während der Abtastung des zu überwachenden Bereichs wird der Sendestrahl oder gegebenenfalls mehrere Sendestrahlen verschiedener Sender über den zu überwachenden Bereich geführt. Dabei ist der Sendestrahl entsprechend der Ausdehnung des zu detektierenden Objekts mehrfach auf das Objekt gerichtet. Die dabei am Empfänger registrierten Positionsmeßwerte werden in der Auswerteeinheit mit den Sollwerten für die Kontur des Objekts verglichen. Hierzu wird wenigstens ein Toleranzband definiert, wobei die Breite des Toleranzbandes abhängig von der Streuung der Meßwerte gewählt wird; vorzugsweise liegt die Breite des Toleranzbandes in der Größenordnung der Standardabweichung der Positionsmeßwerte am Rand des zu überwachenden Bereichs, d.h. an der Stelle, die am weitesten von der Vorrichtung entfernt ist.

Ein Objekt mit der genannten Kontur gilt dann als erkannt, wenn eine vorgegebene Mindestanzahl von Positionsmeßwerten innerhalb des Toleranzbandes registriert wird.

Der Vorteil dieses Vorgehens besteht darin, daß zur Bewertung, ob ein Objekt mit der bekannten Kontur vorliegt, nicht einzelne Positionsmeßwerte, sondern mehrere über einen Raumbereich verteilte Positionsmeßwerte herangezogen werden. Würden jeweils einzelne Positionsmeßwerte mit vorgegebenen Sollwerten verglichen werden, so könnten durch Meßwertschwankungen verursachte fehlerhafte Einzelmessungen dazu führen, daß ein im Überwachungsbereich befindliches Objekt nicht erkannt wird.

Demgegenüber wird beim erfindungsgemäßen Verfahren lediglich gefordert, daß eine Mindestanzahl von Positionsmeßwerten innerhalb eines vorgegebenen Bereichs liegt. Demzufolge kann das Objekt auch dann erkannt werden, wenn einzelne Meßwerte fehlerhaft sind. Dies bedeutet jedoch nicht, daß die mit diesem Verfahren erzielte Detektionssicherheit geringer ist als bei einer Einzelmessung.

Vielmehr ist die Detektionssicherheit bei geeigneter Wahl des Toleranzbandes und der geforderten Mindestanzahl N der Positionsmeßwerte im Toleranzband beträchtlich größer.

Dies beruht darauf, daß sich die Detektionswahrscheinlichkeit für die Objekterkennung multiplikativ aus den Detektionswahrscheinlichkeiten für die Einzelmessungen zusammensetzt. Demzufolge können bei einer hinreichend großen Anzahl von Meßwerten, die zur Erkennung des Objekts herangezogen werden, sehr geringe Fehlerraten, typischerweise kleiner als $10^{-3}$ bei der Detektion erreicht werden.

Die Detektionswahrscheinlichkeit kann noch dadurch gesteigert werden, indem die Messung gemäß des erfindungsgemäßen Verfahrens über mehrere Periodendauern wiederholt wird. Dies ist insbesondere dann zweckmäßig, wenn stationäre Objekte in einem Bereich zu erfassen sind.

Vorteilhafterweise können die Positionswerte für die Toleranzbänder und damit auch für die Konturen der Objekte als räumlich und/oder zeitlich veränderliche Größen in der Auswerteeinheit abgespeichert sein. Damit können die entsprechenden Objekte auch an verschiedenen Positionen und bei verschiedenen Orientierungen im zu überwachenden Bereich erkannt werden. Zur orts- und zeitabhängigen Wahl der Konturen werden zweckmäßigerweise die Geometriedaten der Kontur des Objekts in der Auswerteeinheit gespeichert. Der Absoluton und die Orientierung der Kontur dagegen sind von zeit- und ortsabhängigen Variablen gebildet.

Ein Vorteil des erfindungsgemäßen Verfahrens besteht insbesondere darin, daß Objekte, im folgenden Referenzobjekte genannt, deren Konturen in der Auswerteeinheit gespeichert sind, mit einer großen Detektionssicherheit von anderen Objekten, selbst wenn diese dicht vor den Referenzobjekten angeordnet sind, unterschieden werden können.

Dieses Verfahren kann besonders im Bereich des Personenschutzes vorteilhaft eingesetzt werden. Dort besteht oftmals die Aufgabe darin, mittels der Vorrichtung eine dicht vor einer Wand stehende Person sicher zu erkennen. Dieses Problem kann insbesondere mit dem in Anspruch 2 beschriebenen Verfahren gelöst werden.

Die Erfindung wird im nachstehenden anhand der Zeichnungen erläutert. Es zeigen

Fig. 1:     ein Blockschaltbild einer Vorrichtung zum Erfassen von Objekten,

Fig. 2     Vorrichtung nach Fig. 1 mit dem von der Vorrichtung überwachten Bereich,

Fig. 3     ein Ausführungsbeispiel für an die Konturen von Referenzobjekten angepaßte Toleranzbänder,

Fig. 4     Häufigkeiten der Meßwerte in den Toleranzbändern gemäß Fig. 3 beim Vermessen einer Wand,

Fig. 5     Häufigkeiten der Meßwerte in den Toleranzbändern gemäß Fig. 3 beim Vermessen eines vor einer Wand angeordneten Objektes.

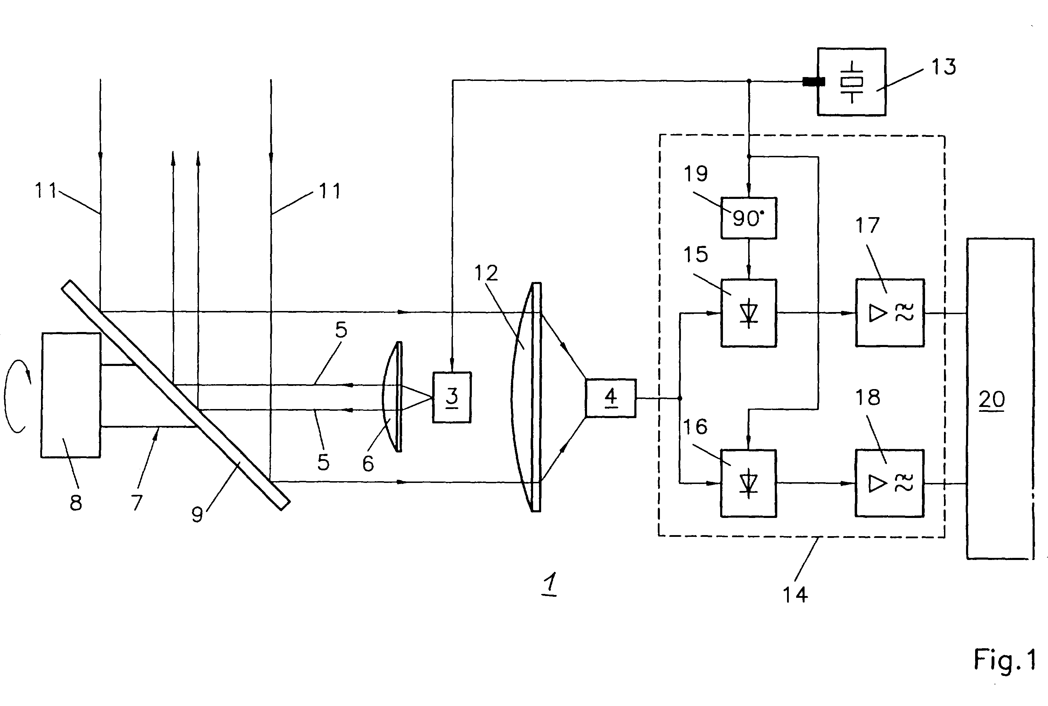

In Fig. 1 ist eine Vorrichtung 1 zum Erfassen von Objekten 2 dargestellt. Im vorliegenden Ausführungsbeispiel ist die Vorrichtung 1 als einen Sender 3 und einen Empfänger 4 aufweisende optoelektronische Vorrichtung 1 ausgebildet.

Der Sender 3 emittiert einen Sendelichtstrahl 5, der mittels einer Sendeoptik 6 fokussiert wird. Der Sender 3 ist zweckmäßigerweise als Laserdiode ausgebildet. Das fokussierte Sendelicht wird über eine Ablenkvorrichtung 7 abgelenkt. Die Ablenkvorrichtung 7 ist von einem über einen Motor 8 angetriebenen, rotierenden Drehspiegel 9 ausgebildet, der den Sendelichtstrahl 5 entlang des zu überwachenden Bereichs 10 der in diesem Fall die Form einer Ebene aufweist, führt. Durch die Rotation der Ablenkvorrichtung 7 wird der zu überwachende Bereich 10 periodisch abgetastet.

Innerhalb eines Scans, d.h. während einer Umdrehung der Ablenkvorrichtung 7, wird der zu überwachende Bereich 10 einmal vom Sendelichtstrahl 5 vollständig abgetastet.

Der Sendelichtstrahl 5 trifft auf das Zentrum des Drehspiegels 9 und wird vom Drehspiegel 9 auf das Objekt 2 geführt. Die von einem Objekt 2 diffus reflektierten Empfangslichtstrahlen 11 werden vom Randbereich des Drehspiegels 9 über eine Empfangsoptik 12 dem Empfänger 4 zugeführt. Der Empfänger 4 ist vorzugsweise als Fotodiode ausgebildet.

Alternativ zur Ablenkvorrichtung 7 können mehrere jeweils nebeneinander liegend angeordnete Sender 3 und Empfänger 4 zur Überwachung des Bereichs eingesetzt werden. In diesem Fall ist die Vorrichtung 1 zweckmäßigerweise als Lichtgitter ausgebildet.

Zur Bestimmung der Position der Objekte 2 im zu überwachenden Bereich wird mit der Vorrichtung 1 die Distanz des Objekts 2 zur Vorrichtung 1 bestimmt. Die Entfernungsmessung erfolgt zweckmäßigerweise nach dem Phasenmeßprinzip.

Das Sendelicht wird über einen Oszillator 13 mit einer Frequenz f amplitudenmoduliert. Zur Bestimmung der Distanz des Objekts 2 von der Vorrichtung 1 wird die Phasendifferenz zwischen dem Sendelichtstrahl 5 und dem vom Objekt 2 reflektierten Empfangslichtstrahl 11 gemessen und in einen Entfernungswert umgerechnet.

Dem Empfänger 4 ist ein Phasendetektor 14 nachgeschaltet. Dort wird das vom Oszillator 13 zum Sender 3 geführte Sendesignal und das am Ausgang des Empfängers 4 anstehende Empfangssignal in Signale umgesetzt, welche die Phasendifferenz zwischen Sende- und Empfangssignal enthalten.

Hierzu werden die Sende- und Empfangssignale auf phasenempfindliche Gleichrichter 15, 16 geführt. Die Signale an den Ausgängen der phasenempfindlichen Gleichrichter 15, 16 enthalten jeweils einen Faktor, der die Phasendifferenz enthält, sowie einen Amplitudenfaktor, der ein Maß für die Empfangslichtintensität ist.

Zur Elimination der Amplitudenfaktoren wird das Empfangssignal jeweils einem dem Gleichrichter 15, 16 nachgeschalteten Tiefpaß 17, 18 zugeführt, wobei die Gleichrichter 15, 16 über einen Phasenschieber 19 um $\pi/2$ phasenversetzt sind.

An den Ausgängen der Tiefpässe 17, 18 liegen Signale der Form $A \cdot \sin \Delta \varphi$ und $A \cdot \cos \Delta \varphi$ an, wobei A der Amplitudenfaktor und $\Delta \varphi$ die Phasendifferenz von Sende- und Empfangssignal darstellt. In einer Auswerteeinheit 20, die eine Rechnereinheit, vorzugsweise einen Microcontroller, aufweist, wird der Quotient $\tan \Delta \varphi$ der beiden Signale gebildet, wodurch der Amplitudenfaktor A eliminiert wird. Anschließend wird aus der Phasendifferenz $\Delta \varphi$ der Entfernungswert bei bekannter Modulationsfrequenz f berechnet.

Der Entfernungswert wird zusammen mit einem mittels an der Ablenkvorrichtung 7 angeordneten, in den Zeichnungen nicht dargestellten Winkelgeber ermittelten Winkel, unter dem das Sendelicht ausgesendet wird, in der Auswerteeinheit 20 gespeichert. Dieser Winkel ergibt zusammen mit dem Entfernungswert die Absolutposition des Objekts 2 im zu überwachenden Bereich. Bei einer räumlichen Abtastung wird zusätzlich die Höhenlage des Sendelichtstrahls 5 in die Auswerteeinheit 20 eingelesen und dort abgespeichert.

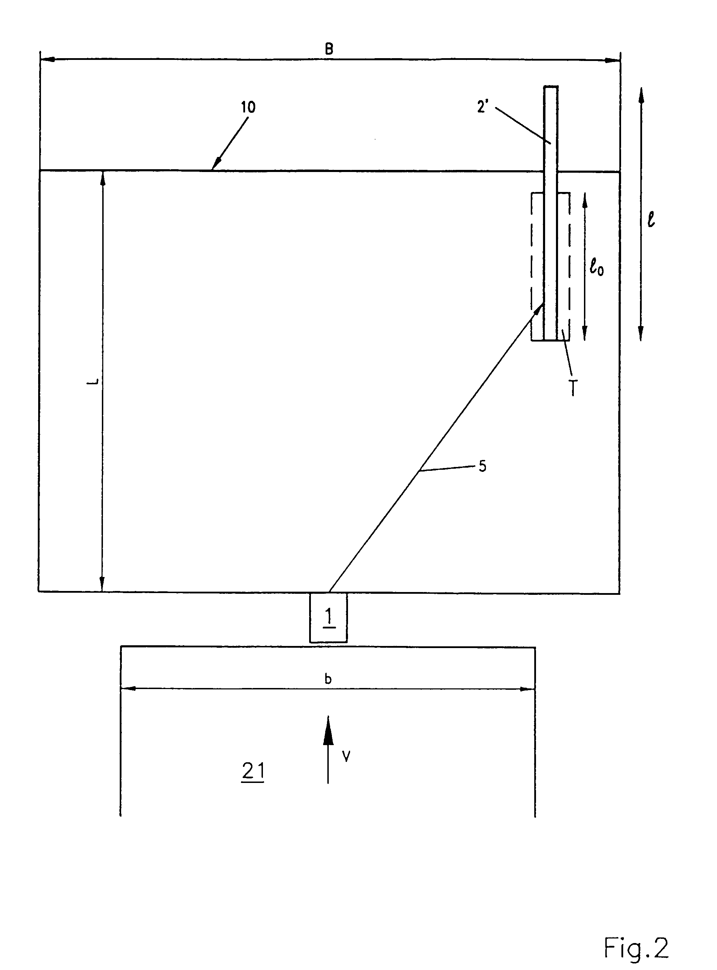

Im folgenden wird das erfindungsgemäße Verfahren für das in Fig. 2 dargestellte Ausführungsbeispiel erläutert. Die optoelektronische Vorrichtung 1 ist an die Stirnseite eines Fahrzeugs 21 montiert. Die Breite des Fahrzeugs beträgt b. Das Fahrzeug 21, das vorzugsweise als fahrerloses Transportfahrzeug ausgebildet ist, bewegt sich mit einer Geschwindigkeit v beispielsweise in einer Fabrikhalle.

Zur Vermeidung von Kollisionen wird mittels der optoelektronischen Vorrichtung 1 ein ebener, rechteckförmiger Bereich 10 mit der Breite B und mit der Länge L vor dem Fahrzeug 21 überwacht. Die Breite B ist zweckmäßigerweise an die Fahrzeugbreite angepaßt, da Objekte 2, die neben dem Fahrzeug angeordnet sind, nicht zu Kollisionen führen und daher nicht überwacht werden müssen.

Da jedoch die Meßwerte bei der Detektion von Objekten 2 im Bereich 10 aufgrund systematischer Fehler in der Vorrichtung 1 eine bestimmte Streubreite aufweisen, ist die Breite B des zu überwachenden Bereichs 10 größer als die Fahrzeugbreite b. Dadurch wird erreicht, daß Objekte 2 im überwachenden Bereich 10 auch dann erfaßt werden, wenn die wahre Distanz des Objekts 2 zur Vorrichtung 1 senkrecht zur Fahrtrichtung des Fahrzeugs 21 kleiner b / 2 ist, aufgrund von Streuungen der Meßwerte jedoch eine Distanz, die größer als b / 2 ist, gemessen wird.

Bei der Überwachung des Bereichs 10 vor dem Fahrzeug 21 sollen insbesondere Referenzobjekte 2', die eine bestimmte Kontur aufweisen, von anderen Objekten 2 unterschieden werden.

Im vorliegenden Ausführungsbeispiel sind die Referenzobjekte 2' von ebenen Wandelementen oder Wänden gebildet, die sich parallel zur Fahrtrichtung des Fahrzeugs 21 erstrecken.

Zweckmäßigerweise bilden die Referenzobjekte 2' stationäre Hindernisse, die bei geeigneter Vorgabe der Geschwindigkeit und der Richtung des Fahrzeugs 21 ohne Gefahr von Kollisionen umfahren werden können. Dies ist insbesondere beim Einsatz von spurgeführten fahrerlosen Transportfahrzeugen in Fabrikhallen der Fall. Derartige Referenzobjekte 2' sind von anderen, üblicherweise nicht stationären Objekten 2, die bei Eindringen in den zu überwachenden Bereich 10 mit dem Fahrzeug 21 kollidieren können, zu unterscheiden. Insbesondere können derartige Objekte 2 auch Personen sein, die sich innerhalb des Bereichs 10 bewegen.

Die Positionsmeßwene der Referenzobjekte 2', die eine bestimmte Kontur aufweisen, sind in der Auswerteeinheit 20 als Sollwerte abgespeichert. Für statische Anwendungen, d. h. für ein stehendes Fahrzeug 21 (v = 0) oder bei anderen Anwendungen, wie z. B. der Überwachung des Zugangs von Maschinen, können die Sollwerte an festen Orten im zu überwachenden Bereich 10 vorgegeben sein.

Im vorliegenden Ausführungsbeispiel bestehen die Referenzobjekte 2' mit vorgegebenen Konturen aus Wandelementen, die sich parallel zur Fahrtrichtung des Fahrzeugs 21 erstrecken. In diesem Fall sind die Position-Meßwerte, die in der Auswerteeinheit 20 gespeichert sind, zeitlich und räumlich veränderliche Grössen.

Demzufolge werden die Sollwerte in der Auswerteeinheit 20 als Wandelemente einer bestimmten Länge $L_0$ und mit einer vorgegebenen Orientierung, nämlich parallel zur Fahrtrichtung des Fahrzeugs 21 verlaufend, in der Auswerteeinheit 20 gespeichert, wobei Anfangs- und Endpunkt der Wandelemente Variablen sind. Zweckmäßigerweise wird von einer ebenen Oberfläche der Wandelemente ausgegangen, so daß die Kontur der Wandelemente die Form von Geraden der aufweist.

Zur Auswertung der Meßwerte werden die innerhalb eines Scans ermittelten Position-Meßwerte in der Auswerteeinheit 20 abgespeichert. Zur Unterscheidung der Referenzobjekte 2' von anderen Objekten 2 werden in der Auswerteeinheit 20 Toleranzbänder T definiert, deren Form an die Kontur der Referenzobjekte 2' angepaßt ist. Im vorliegenden Ausführungsbeispiel weisen die Toleranzbänder T die Form von Rechtecken mit einer vorgegebenen Länge $l_0$ auf. Die Lage des Toleranzbandes T ist zweckmäßigerweise so gewählt, daß in dessen Zentrum das Wandelement angeordnet ist.

Die Breite der Toleranzbänder T entspricht zweckmäßigerweise der Standardabweichung der Position-Meßwerte für die Wandelemente an dem der Vorrichtung 1 gegenüberliegenden Rand des zu überwachenden Bereichs 10.

Das Referenzobjekt 2' gilt als erkannt, wenn eine Mindestanzahl N der Position-Meßwerte innerhalb eines Toleranzbandes T registriert wird. Im einfachsten Fall wird pro Referenzobjekt ein Toleranzband T definiert (Fig. 2). Die Anzahl N der Positionsmeßwerte innerhalb des Toleranzbandes T bestimmt sich aus der Dimension des Toleranzbandes T und der Ortsauflösung der Vorrichtung.

Ein Maßstab für die Ortsauflösung sind die Anzahl der Distanzmessungen pro Winkelsegment. Je mehr Messungen dieser Art durchgeführt werden, desto größer ist die Anzahl der Meßpunkte $N_0$, die auf das Wandelement fallen.

Da die Breite des Toleranzbandes T der Standardabweichung der Positionsmeßwerte am Rand des zu überwachenden Bereichs 10 entspricht, fallen für hinreichend große Werte von $N_0$ ca. 68% der Meßwerte, die auf das Referenzobjekt 2' treffen, in das Toleranzband T. Demzufolge kann ein Referenzobjekt 2' mit hinreichend großer Sicherheit als solches erkannt gelten, wenn beispielsweise mehr als 60% der Meßwerte $N_0$ für das Referenzobjekt 2' in das Toleranzband T fallen. In diesem Fall beträgt die Mindestanzahl N für die Erkennung eines Referenzobjekts 2' $N - 0{,}6\ N_0$.

Die Wahrscheinlichkeit, daß ein einzelner Meßpunkt innerhalb des Toleranzbandes liegt, ergibt sich aus dem Verhältnis der Standardabweichungen der Messungen und der Breite des Toleranzbandes. Im vorliegenden Fall beträgt diese Wahrscheinlichkeit $P_1 = 0{,}68$.

Die Detektionswahrscheinlichkeit für das Wandelement berechnet sich aus der Bernoulli-Gleichung in welche die Einzelwahrscheinlichkeiten $P_1$ eingehen, wobei zur Gesamtwahrscheinlichkeit alle Meßwertkombinationen beitragen, für die wenigstens 60% der Meßwerte in das Toleranzband fallen.

Durch die Vorgabe der Länge $l_0$ des Toleranzbandes T (Fig. 2) werden Wände oder Wandelemente als solche erkannt, wenn sie eine Mindestlänge $l_0$ aufweisen. Falls die Länge 1 eines Wandelements kleiner als $l_0$ ist, wird die Mindestanzahl N der Meßwerte nicht erreicht und das Objekt nicht als Wandelement erkannt. Typische Zahlenwerte für o. g. Parameter sind $l_0 = 1$ m und $30 < N < 60$, wobei N von der Lage des Wandelements im Bereich abhängt.

Da beim Einlesen der Positionsmeßwerte in die Auswerteeinheit 20 die Absolutposition des Referenzobjekts 2' unbekannt ist, ist auch bei Beginn der Auswertung die Position des Toleranzbandes T unbekannt. Demzufolge wird das Toleranzband T während der Auswertung innerhalb des gesamten Bereichs 10 mit einer vorgegebenen Schrittweite, die kleiner als die Länge $l_0$ bzw. Breite des Toleranzbandes T ist, verschoben, bis das Wandelement im Toleranzband zentriert ist.

Dieses Vorgehen ist insbesondere dann vorteilhaft, wenn in dem zu überwachenden Bereich 10 nur Referenzobjekte 2' mit derselben Kontur überwacht werden müssen und die für die Auswertung zur Verfügung stehende Zeit hinreichend groß ist.

Für den Einsatz der optoelektronischen Vorrichtung 1 im Bereich des Personenschutzes besteht ein Problem oftmals darin, vor einer Wand angeordnete Personen mit einer hohen Detektionssicherheit möglichst schnell zu erkennen. Diese Problemstellung liegt insbesondere dann vor, wenn Fahrzeuge 21 in engen, durch ebene Wände begrenzten Gassen fahren, in die Personen eintreten können. Die Fahrzeuge 21 sind oftmals spurgeführt, so daß diese in engem Abstand die Wände passieren können. Eine vor der Wand angeordnete Person würde von dem Fahrzeug 21 erfaßt werden.

Bei derartigen Applikationen werden wiederum die Konturen der parallel zur Fahrtrichtung des Fahrzeugs 21 angeordneten Wandelemente als Sollwerte in der Auswerteeinheit 20 gespeichert. Zweckmäßigerweise wird als Referenzobjekt 2' lediglich ein Wandelement mit vorgegebener Länge $l_0$ in der Auswerteeinheit 20 abgespeichert.

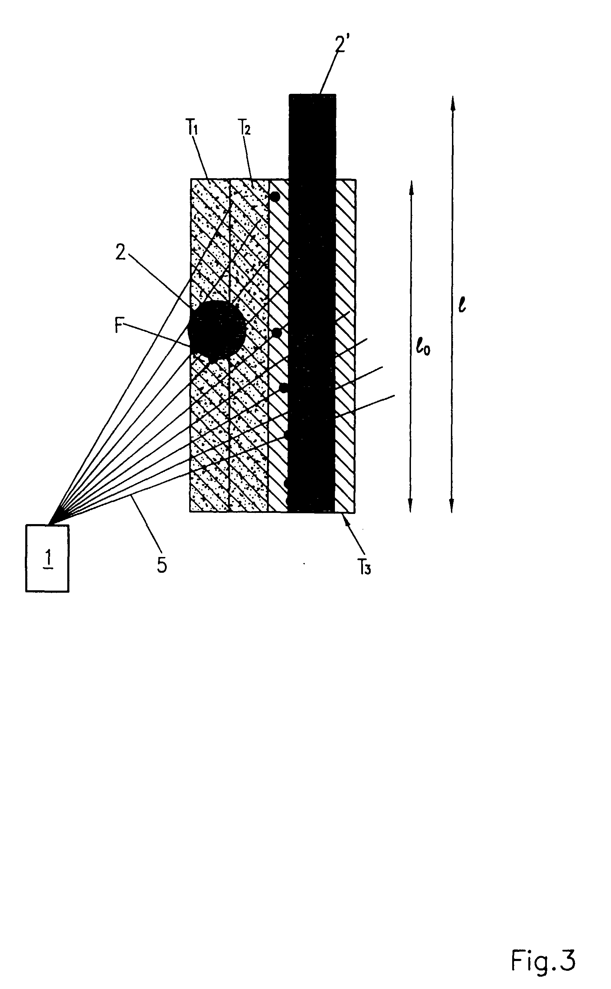

In diesem Fall werden mehrere Toleranzbänder $T_1$, $T_2$, $T_3$ definiert. Die Toleranzbänder $T_1$, $T_2$, $T_3$ weisen die Form von Rechtecken auf (Fig. 3).

Zur Auswertung werden die Meßwerte, die innerhalb eines Scans aufgenommen werden, in der Auswerteeinheit 20 gespeichert. Um eine möglichst schnelle Auswertung zu gewährleisten, werden die Toleranzbänder $T_1$, $T_2$, $T_3$ nicht über den gesamten Bereich 10 verschoben, sondern sie entspringen an einem definierten Fixpunkt F. Dieser Fixpunkt F wird vom Meßwert, dessen Abstand quer zur Fahrtrichtung am kleinsten ist, gebildet, da er die größte Gefahr einer Kollision darstellt. Da sich die Objekte 2 innerhalb des Bereichs 10 bewegen können, kann die Position des Fixpunktes F für verschiedene Scans unterschiedlich sein.

Da die Orientierung der Referenzobjekte 2' gegeben ist, nämlich parallel zur Fahrtrichtung des Fahrzeugs verlaufende ebene Wände, werden die Toleranzbänder $T_1$, $T_2$, $T_3$ in derselben Richtung im Bereich 10 ausgerichtet, wobei wenigstens ein Toleranzband $T_1$, $T_2$, $T_3$ am Fixpunkt entspringt.

In einer vorteilhaften Ausführungsform sind, wie in Fig. 3 - 5 dargestellt, drei rechteckige Toleranzbänder $T_1$, $T_2$, $T_3$ vorgesehen, wobei die beiden ersten

Toleranzbänder $T_1$, $T_2$ aneinanderliegend innerhalb eines dritten Toleranzbandes $T_3$ liegend angeordnet sind. Das Toleranzband $T_3$ ragt quer zur Fahrtrichtung des Fahrzeugs 21 in Richtung des Sendelichtstrahls 5 über die beiden ersten Toleranzbänder $T_1$, $T_2$ hinaus, wobei das erste und dritte Toleranzband $T_1$, $T_3$ am Fixpunkt F entspringen.

Die Form der Toleranzbänder $T_1$, $T_2$, $T_3$ sowie ein von einem Wandelement gebildetes Referenzobjekt 2' sowie ein vor der Wand angeordnetes Objekt 2 sind in Fig. 3 dargestellt.

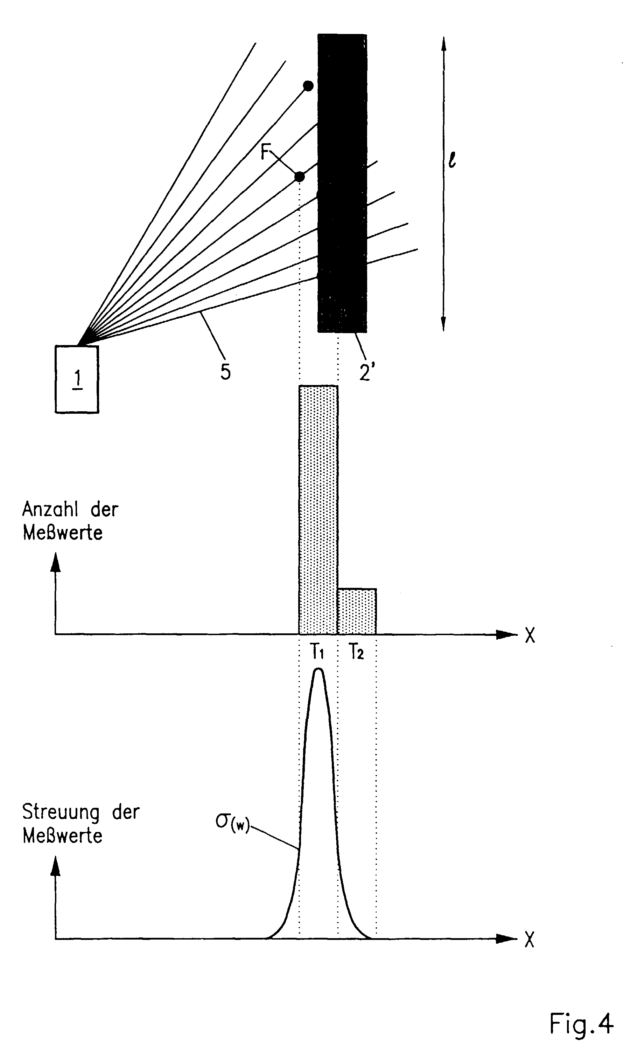

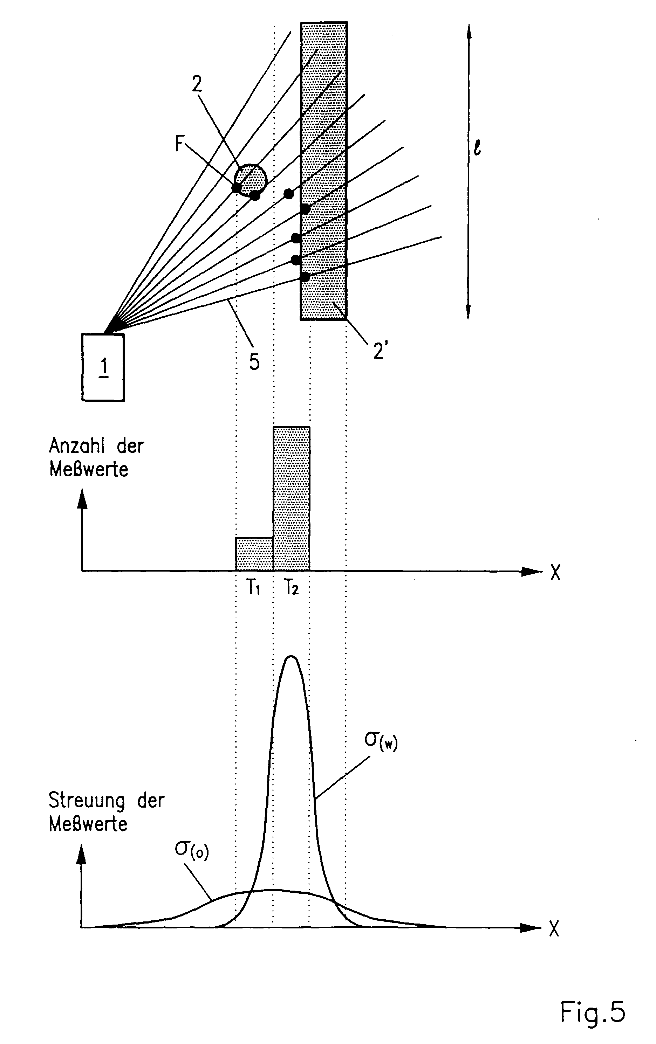

In dem in Fig. 3 und Fig. 5 dargestellten Fall ist ein Objekt 2 vor dem Wandelement angeordnet, so daß der Fixpunkt F von einem vom Objekt 2 stammenden Positionsmeßwert gebildet ist. Dagegen ist in Fig. 4 lediglich ein Wandelement im zu überwachenden Bereich 10 angeordnet, so daß der Fixpunkt F von dem am nächsten zur Vorrichtung 1 gelegenen, vom Wandelement stammenden Positionsmeßwert gebildet ist.

Die Lage der Toleranzbänder $T_1$, $T_2$, $T_3$ in Fahrtrichtung des Fahrzeugs 21 wird wie folgt bestimmt. Ausgangspunkt ist die Lage des Fixpunktes F. Zuerst werden die Toleranzbänder $T_1$, $T_2$, $T_3$ in Richtung der Vorrichtung 1 solange erstreckt, bis keine weiteren Meßwerte mehr in die Toleranzbänder $T_1$, $T_2$, $T_3$ fallen, d. h. bis das Ende des Wandelements erreicht ist, oder bis die vorgegebene Länge $l_0$ oder Toleranzbänder $T_1$, $T_2$, $T_3$ erreicht ist. Im ersten Fall werden anschließend die Länge der Toleranzbänder $T_1$, $T_2$, $T_3$ in der entgegengesetzten Richtung solange vergrößert, bis die Gesamtlänge $l_0$ erreicht ist.

Die Breite des ersten und zweiten Toleranzbandes $T_1$, $T_2$ entspricht im wesentlichen der Standardabweichung der Meßwerte am Rand des zu überwachenden Bereichs 10. Der Überstand des dritten Toleranzbandes $T_3$ über die beiden ersten Toleranzbänder $T_1$, $T_2$ ist von derselben Größenordnung.

Ein Wandelement gilt als erkannt, wenn in das dritte Toleranzband $T_3$ mindestens N Meßwerte fallen. Die Anzahl N wird zweckmäßigerweise wie bereits oben beschrieben gewählt, nämlich $N = 0,6\, N_0$, wobei $N_0$ der Anzahl der auf das Wandelement auftreffenden Meßpunkte entspricht.

Aus der Anzahl der Meßwerte, die in das erste und zweite Toleranzband $T_1$, $T_2$ fallen, wird ein gegebenenfalls vor dem Wandelement angeordnetes Objekt 2 vom Wandelement unterschieden. Dabei sind die in Fig. 4 und 5 beschriebenen Fälle zu unterschieden.

In Fig. 4 ist der Fall dargestellt, daß kein Objekt 2 vor dem Wandelement angeordnet ist. In diesem Fall werden entsprechend der Streuung $\sigma$ (w) der Meßwerte des Wandelements im ersten Toleranzband $T_1$ bedeutend mehr Meßwerte registriert als im zweiten Toleranzband $T_2$.

In Fig. 5 ist der Fall dargestellt, daß ein Objekt 2 vor dem Wandelement angeordnet ist. Die Standardabweichung der Meßwerte für die Wand $\sigma$ (w) ist relativ gering. Dies ist beispielsweise dann der Fall, wenn die Wand eine das Sendelicht gut reflektierende, homogene Oberfläche aufweist. Demgegenüber ist die Standardabweichung $\sigma$ (o) des Objekts 2 sehr groß, d. h. die Oberfläche reflektiert das Sendelicht nur zu einem geringen Prozentsatz. In diesem Fall fallen im wesentlichen nur die Meßwerte des Objekts 2, welches bedeutend kleiner als das Wandelement ist, in das erste Toleranzband $T_1$.

Dagegen fallen die Meßwerte des Wandelements in das zweite Toleranzband $T_2$. Somit ist die Anzahl der Meßwerte im zweiten Toleranzband $T_2$ erheblich größer als die Anzahl im ersten Toleranzband $T_1$.

Demzufolge kann allein aufgrund der Auswertung der Anzahlen der Meßwerte in den Toleranzbändern $T_1$, $T_2$ unterschieden werden, ob ein Objekt 2 vor dem Wandelement angeordnet ist.

Zur quantitativen Auswertung werden zweckmäßigerweise folgende Regeln definiert.

1) Wie bereits oben beschrieben, liegt ein Wandelement dann vor, wenn für die Anzahl $A_3$ der Meßwerte im dritten Toleranzband $T_3$ gilt

$$A_3 \geq N.$$

Falls diese Regel nicht erfüllt ist, liegt ein vom Wandelement verschiedenes Objekt 2 vor.

Um Einflüsse von Meßwertstreuungen zu vermeiden, kann für die Erkennung derartiger Objekte 2 gefordert werden:

$$A_3 > M,$$

wobei M an die Ausdehnung der Objekte 2 angepaßt ist. Bei der in Fig. 3 dargestellten Geometrie fallen beispielsweise bei der dargestellten Winkelauflösung der Vorrichtung 1 wenigstens zwei Meßpunkte auf das Objekt 2, so daß sinnvollerweise für M der Wert 2 gewählt wird.

2) Wenn die unter 1) aufgeführte Bedingung erfüllt ist, d.h. im dritten Toleranzband $T_3$ ein Wandelement erkannt wurde, werden zur Unterscheidung des Wandelements von anderen Objekten 2 folgende Regeln definiert:

$$A_1 < F_0 \cdot A_2$$

$$A_1 \geq M.$$

Ein Objekt vor einem Wandelement gilt als erkannt, wenn die Anzahl $A_1$ der Meßwerte im ersten Toleranzband $T_1$ kleiner das Produkt der Anzahl $A_2$ der Meßwerte im zweiten Toleranzband $T_2$ und einem Fak-

tor $F_0$ ist, wobei $F_0$ zweckmäßigerweise im Bereich $1 \leq F_0 \leq 3$ gewählt wird. Zweckmäßigerweise wird $F_0 = 2$ gewählt, so daß eine deutliche Differenz der Meßwerte in den Toleranzbändem $T_1$ und $T_2$ zur Erkennung eines Objekts 2 gefordert wird.

Zudem muß wiederum für die Erkennung des Objekts 2 die Bedingung $A_1 \geq M$ erfüllt sein, damit Fehlmessungen aufgrund von Meßwertstreuungen ausgeschlossen werden können.

Der Vorteil dieses Verfahrens besteht darin, daß Objekte 2 vor einem Wandelement selbst dann erkannt werden können, wenn, wie in Fig. 5 dargestellt, die Verteilungsfunktionen für die Meßwerte eines Objekts σ (o) und eines Wandelements σ (w) überlappen (Fig. 5).

Dies bedeutet, daß mit einer gemäß den in Fig. 5 dargestellten Veneilungsfunktionen der Streuungen der Meßwerte vorgegebenen Wahrscheinlichkeit bei einer Einzelmessung ein Objekt 2 irrtümlicherweise als im Wandelement oder umgekehrt identifiziert werden kann.

Demgegenüber wird beim erfindungsgemäßen Verfahren durch die Auswertung einer möglichst großen Anzahl von Meßwerten die Detektionssicherheit beträchtlich erhöht.

Ein weiterer Vorteil des erfindungsgemäßen Verfahrens besteht darin, daß durch eine geeignete Wahl der Parameter der Toleranzbänder $T_1$, $T_2$, $T_3$ bzw. der in den Regeln verwendeten Parameter die zu erzielende Detektionssicherheit eingestellt werden kann. Wird beispielsweise die Breite eines der Toleranzbänder $T_1$, $T_2$, $T_3$ entsprechend der Standardabweichung der Meßwerte eines Wandelements gewählt, fallen bei hinreichend großer Anzahl der auf ein Wandelement auftreffenden Meßpunkte ca. 68% aller Meßwerte in das Toleranzband $T_1$, $T_2$, $T_3$. Wird die Breite des Toleranzbandes $T_1$, $T_2$, $T_3$ um das Dreifache erhöht, fallen bereits 99% aller Meßwerte in das Toleranzband $T_1$, $T_2$, $T_3$, was die Detektionssicherheit entsprechend erhöht.

Jedoch können insbesondere das erste und zweite Toleranzband $T_1$, $T_2$ nicht beliebig breit gewählt werden. Die Obergrenze ist im wesentlichen durch den minimalen Abstand des Objekts 2 zum Wandelement gegeben.

**Patentansprüche**

1. Verfahren zum Erfassen von in einem zu überwachenden Bereich befindlichen oder in diesen Bereich eindringenden Objekten mittels einer Vorrichtung mit wenigstens einem Sender, wenigstens einem Empfänger und einer Auswerteeinheit, wobei ein vom Sender emittierter Sendestrahl innerhalb des Bereichs zur Ermittlung der Positionen der Objekte geführt wird und diese Positionsmeßwerte in der Auswerteeinheit abgespeichert werden, dadurch gekennzeichnet, daß zur Erfassung von eine bestimmte Kontur aufweisenden Objekten (2) die Positionsmeßwerte für das entsprechende Objekt (2) mit Sollwerten verglichen werden, die in der Auswerteeinheit (20) aus der Kontur des Objekts (2) bei vorgegebener Position in dem zu überwachenden Bereich (10) berechnet werden, und daß ein die bestimmte Kontur aufweisendes Objekt (2) als erkannt gilt, wenn eine Mindestanzahl N der Positionsmeßwerte innerhalb wenigstens eines Toleranzbandes T um die Sollwerte fällt, wobei die Mindestanzahl N der Positionswerte und die Breite des Toleranzbandes T in der Auswerteeinheit (20) in derselben Größenordnung wie die Streuung der Positionsmeßwerte gewählt wird.

2. Verfahren nach Anspruch 1, dadurch gekennzeichnet, daß zur Erkennung eines Objektes (2), das im Strahlengang des Sendestrahls (5) vor einem eine bestimmte Kontur aufweisenden Referenzobjekt (2') angeordnet ist, wobei die Ausdehnung des Objekts (2) kleiner als die Ausdehnung des Referenzobjekts (2') ist,

 - der bei Erfassung dieses Objekts (2) bezüglich einer vorgegebenen Raumrichtung am nächsten zur Vorrichtung (1) gelegene Positionsmeßwert als Fixpunkt F definiert wird,

 - vom Fixpunkt F zu größeren Distanzen von der Vorrichtung (1) hin Toleranzbänder $T_1$, $T_2$, $T_3$ im zu überwachenden Bereich (10) definiert werden, wobei die Formen der Toleranzbänder $T_1$, $T_2$, $T_3$ an die Kontur des Referenzobjekts (2') angepaßt sind,

 - die Anzahl der Positionsmeßwerte, die in die einzelnen Toleranzbänder $T_1$, $T_2$, $T_3$ fallen, in der Auswerteeinheit (20) gespeichert werden,

 - das Objekt (2) vor dem Referenzobjekt (2') als erkannt gilt, wenn die Anzahl der Positionsmeßwerte in dem den Fixpunkt (7) aufweisenden Toleranzband $T_1$ kleiner ist als die Mindestanzahl N für die Erkennung des Referenzobjekts (2'), jedoch größer als eine Mindestanzahl M ist, wobei M < N ist, und wenn die Summe der Positionsmeßwerte in den anderen Toleranzbändern $T_2$ oder $T_3$ größer als die Mindestanzahl N für die Erkennung des Referenzobjekts (2') ist.

3. Verfahren nach Anspruch 1 oder 2, dadurch gekennzeichnet, daß die in der Auswerteeinheit (20) gespeicherten Sollwerte der Positionsmeßwerte für die Kontur des Objekts (2) bzw. des Referenzobjekts (2') räumlich und / oder zeitlich veränderlich sind.

**4.** Verfahren nach einem der Ansprüche 1 - 3, dadurch gekennzeichnet, daß für einen als ebene Fläche ausgebildeten zu überwachenden Bereich (10) und für ein Referenzobjekt (2'), das als senkrecht zum Bereich (10) stehendes, entlang einer Geraden verlaufendes Wandelement ausgebildet ist, die Toleranzbänder T, $T_1$, $T_2$, $T_3$ die Form von Rechtecken aufweisen, wobei die Längen $l_0$ der parallel zu dem Wandelement verlaufenden Seiten der Rechtecke an die Längen 1 des Wandelements angepaßt sind.

**5.** Verfahren nach Anspruch 4, dadurch gekennzeichnet, daß zur Erkennung eines vor einem Wandelement angeordneten Objekts (2), insbesondere einer Person, drei rechteckige Toleranzbänder $T_1$, $T_2$, $T_3$ vorgesehen sind, wobei die beiden ersten Toleranzbänder $T_1$, $T_2$ aneinander angrenzen und innerhalb des dritten Toleranzbandes $T_3$ angeordnet sind, und wobei das erste und das dritte Toleranzband $T_1$, $T_3$ am Fixpunkt F entspringen,.

**6.** Verfahren nach Anspruch 5, dadurch gekennzeichnet, daß ein Wandelement als erkannt gilt, wenn die Anzahl der Positionsmeßwerte $A_3$ im dritten Toleranzband $T_3$ größer als die Mindestanzahl N für die Erkennung eines Referenzobjektes (2') ist, und daß bei Erfüllung dieser Bedingung ein vor dem Wandelement angeordnetes Objekt (2) als erkannt gilt, wenn für die Anzahl der Positionsmeßwerte $A_1$ im ersten Toleranzband $T_1$ und für die Anzahl der Positionsmeßwerte $A_2$ im zweiten Toleranzband $T_2$ folgende Bedingungen erfüllt sind

$$A_1 < F_o \cdot A_2$$

$$A_1 \geq M$$

wobei $F_o$ ein Zahlenfaktor im Bereich $1 \leq F_o \leq 3$ ist.

**7.** Verfahren nach einem der Ansprüche 1 - 6, dadurch gekennzeichnet, daß die Breiten der Toleranzbänder T, $T_1$, $T_2$, $T_3$ in der Größenordnung der Standardabweichung der Positionsmeßwerte der Objekte (2) am Rand des zu überwachenden Bereichs (10) liegen.

**8.** Verfahren nach einem der Ansprüche 1 - 7, dadurch gekennzeichnet, daß der zu überwachende Bereich von Sendestrahl periodisch abgetastet wird, und daß die Auswertung der Positionsmeßwerte innerhalb einer Periodendauer erfolgt.

## Claims

**1.** Method for the detection of objects, which are situated in a region to be monitored or penetrate into this region, by means of a device with at least one transmitter, at least one receiver and an evaluating unit, wherein a transmitted beam emitted by a transmitter is guided within the region for ascertaining the positions of the objects and these position measurement values are stored in the evaluating unit, characterised in that - for the detection of objects (2) displaying a certain outline - the position measurement values for the corresponding object (2) are compared with target values which are computed in the evaluating unit (20) from the outline of the object (2) for a given position in the region (10) to be monitored and that an object (2) displaying the certain outline counts as recognised when a minimum number N of the position measurement values falls within at least one tolerance band T around the target values, wherein the minimum number N of the position measurement values and the width of the tolerance band T in the evaluating unit (20) are chosen in the same order of magnitude as the scatter of the position measurement values.

**2.** Method according to claim 1, characterised in that for the recognition of an object (2), which is arranged in the ray path of the transmitted beam (5) ahead of a reference object (2') displaying a certain outline, wherein the extent of the object (2) is smaller than the extent of the reference object (2'),

- the position measurement value, which is situated nearest to the device (1) with respect to a given space direction during the detection of this object (2), is defined as fixed point F,
- tolerance bands $T_1$, $T_2$ and $T_3$ in the region (10) to be monitored are defined from the fixed point F to greater distances from the device (1), wherein the shapes of the tolerance bands $T_1$, $T_2$ and $T_3$ are matched to the outline of the reference object (2'),
- the number of the position measurement values, which fall into the individual tolerance bands $T_1$, $T_2$ and $T_3$, are stored in the evaluating unit (20),
- the object (2) ahead of the reference object (2') counts as recognised when the number of the position measurement values in the tolerance band $T_1$ including the fixed point (7) is smaller than the minimum number N for the recognition of the reference object (2'), but greater than a minimum number M, wherein M is less than N, and when the sum of the position measurement values in the other tolerance bands $T_2$ or $T_3$ is greater than the minimum number N of the recognition of the reference object (2').

**3.** Method according to claim 1 or 2, characterised in that the target values, which are stored in the evaluating unit (20), of the position measurement values for the outline of the object (2) or of the reference object (2') are variable in space and/or time.

4. Method according to one of the claims 1 to 3, characterised in that the tolerance bands T, $T_1$, $T_2$ and $T_3$ have the shape of rectangles for a region (10), which is formed as a planar area and to be monitored, and for a reference object (2'), which is formed as a wall element extending along a straight line and standing perpendicularly to the region (10), wherein the lengths $l_0$ of those sides of the rectangles, which extend parallelly to the wall elements, are matched to the lengths I of the wall element.

5. Method according to claim 4, characterised in that three rectangular tolerance bands $T_1$, $T_2$ and $T_3$ are provided for the recognition of an object (2) arranged ahead of a wall element, in particular a person, wherein the first two tolerance bands $T_1$ and $T_2$ adjoin one another and are arranged within the third tolerance band $T_3$ and wherein the first and the third tolerance band $T_1$ and $T_3$ originate at the fixed point F.

6. Method according to claim 5, characterised in that a wall element counts as recognised when the number of the position measurement values $A_3$ in the third tolerance band $T_3$ is greater than the minimum number N for the recognition of the reference object (2') and that, on the fulfilment of this condition, an object (2) arranged ahead of the wall element counts as recognised when the following conditions are fulfilled for the number of the position measurement values $A_1$ in the first tolerance band $T_1$ and for the number of the position measurement values $A_2$ in the second tolerance band $T_2$:

$$A_1 < F_o \cdot A_2$$

$$A_1 \geq M,$$

wherein $F_0$ is a numerical factor in the region $1 \leq F_0 \leq 3$.

7. Method according to one of the claims 1 to 6, characterised in that the widths of the tolerance bands T, $T_1$, $T_2$ and $T_3$ lie in the order of magnitude of the standard deviation of the position measurement values of the objects (2) at the rim of the region (10) to be monitored.

8. Method according to one of claims 1 to 7, characterised in that the region to be monitored is scanned periodically by the transmitted beam and that the evaluation of the position measurement values takes place within one period duration.

## Revendications

1. Procédé de détection d'objets se trouvant dans une zone à surveiller ou bien d'objets pénétrant dans cette zone, au moyen d'un dispositif comportant au moins un émetteur, au moins un récepteur et une unité d'évaluation, un rayon d'émission, ayant été émis par l'émetteur, étant guidé dans la zone de détermination des positions des objets et ces valeurs de mesure de position étant mémorisées dans l'unité d'évaluation, caractérisé en ce que, pour appréhender des objets (2) présentant un contour déterminé, les valeurs de mesure de position de l'objet (2) correspondant sont comparées à des valeurs de consigne qui sont calculées dans l'unité d'évaluation (20) à partir du contour de l'objet (2) pour une position prédéterminée dans la zone (10) à surveiller, et en ce qu'un objet (2) présentant le contour déterminé est considéré comme identifié lorsqu'un nombre minimal N de valeurs de mesure de position tombe dans les limites d'au moins une bande de tolérance T autour des valeurs de consigne, le nombre minimal N des valeurs de position et la largeur de la bande de tolérance T dans l'unité d'évaluation 20 étant choisis dans le même ordre de grandeur que celui de la dispersion des valeurs de mesure de position.

2. Procédé selon la revendication 1, caractérisé en ce que, pour l'identification d'un objet (2) qui est disposé dans le trajet de rayon suivi par le rayon d'émission (5), devant un objet de référence (2') présentant un contour déterminé, l'étendue de l'objet (2) étant inférieure à l'étendue de l'objet de référence (2'),

   - la valeur de mesure de position donnée lors de la détection de cet objet (2) par rapport à une direction spatiale prédéterminée la plus proche du dispositif (1) est définie comme point fixe F,
   - en partant du point fixe F vers des distances plus grandes vis-à-vis du dispositif (1), des bandes de tolérances $T_1$, $T_2$, $T_3$ dans la zone à surveiller (10) sont définies, les formes des bandes de tolérances $T_1$, $T_2$, $T_3$ étant adaptées au contour de l'objet de référence (2'),
   - le nombre des valeurs de mesure de position qui tombent dans les différentes bandes de tolérances $T_1$, $T_2$, $T_3$ sont mémorisées dans l'unité d'évaluation (20),
   - l'objet (2) situé devant l'objet de référence (2') est considéré comme identifié si le nombre des valeurs de mesure de position dans la bande de tolérance $T_1$ présentant le point fixe (7) est inférieur au nombre minimal N pour l'identification de l'objet de référence (2'), en étant cependant supérieur à un nombre minimal M, M < N, et lorsque la somme des valeurs de mesure de position dans les autres bandes de tolérance $T_2$ ou $T_3$ est supérieure au nombre minimal N pour l'identification de l'objet de référence (2').

3. Procédé selon la revendication 1 ou 2, caractérisé en ce que les valeurs de consigne mémorisées dans l'unité d'évaluation (20), concernant les valeurs de mesure de position pour le contour de l'objet (2) ou de l'objet de référence (2'), sont modifiables spatialement et/ou temporellement.

4. Procédé selon l'une des revendications 1-3, caractérisé en ce que pour une zone (10) à surveiller, constituée sous la forme d'une surface plane et pour un objet de référence (2'), réalisé sous la forme d'élément de paroi perpendiculaire par rapport à la zone (10), s'étendant le long d'une droite, les bandes de tolérance T, $T_1$, $T_2$, $T_3$ ont la forme de rectangles, les longueurs $l_0$ des côtés s'étendant parallèlement à l'élément de paroi des rectangles étant adaptées aux longueurs l de l'élément de paroi.

5. Procédé selon la revendication 4, caractérisé en ce que, pour identifier un objet (2) disposé devant un élément de paroi, en particulier une personne sont prévues trois bandes de tolérar.ce $T_1$, $T_2$, $T_3$ rectangulaires, les deux premières bandes de tolérance $T_1$, $T_2$ étant limitrophes mutuellement et étant disposées à l'intérieur de la troisième bande de tolérance $T_3$ et la première et la troisième bandes de tolérance $T_1$, $T_3$ prenant leur origine au point fixe F.

6. Procédé selon la revendication 5, caractérisé en ce qu'un élément de paroi est considéré comme identifié lorsque le nombre des valeurs de mesure de position $A_3$ dans la troisième bande de tolérance $T_3$ est supérieur au nombre minimal N pour l'identification d'un objet de référence (2'), et en ce qu'en cas de satisfaction de cette condition, un objet (2) disposé devant l'élément de paroi est considéré comme identifié lorsque, pour le nombre des valeurs de mesure de position $A_1$ dans la première bande de tolérance $T_1$ et pour le nombre des valeurs de mesure de position $A_2$ dans la deuxième bande de tolérance $T_2$, les conditions suivantes sont satisfaites

$$A_1 < F_0 \cdot A_2$$

$$A_1 \geq M$$

$F_0$ étant un facteur numérique compris dans la pla-

ge $1 \leq F_0 \leq 3$.

7. Procédé selon l'une des revendications 1-6, caractérisé en ce que les largeurs des bandes de tolérances T, $T_1$, $T_2$, $T_3$ sont situées dans l'ordre de grandeur de l'écart-type des valeurs de mesure de position de l'objet (2) au bord de la zone (10) à surveiller.

8. Procédé selon l'une des revendications 1-7, caractérisé en ce que la zone à surveiller est périodiquement explorée par le rayon d'émission, et en ce que l'évaluation des valeurs de mesure de position s'effectue dans les limites de la durée d'une période.

Fig.1

EP 0 708 928 B1

Fig.2

Fig.3

Fig.4

Anzahl der Meßwerte

Streuung der Meßwerte

$\sigma_{(w)}$

Fig.5